# FASCICULE DE BREVET EUROPEEN

(11) **EP 0 591 034 B1**
(45) Date de publication et mention de la délivrance du brevet: **30.12.1998**
(21) Numéro de dépôt: 93402349.0
(22) Date de dépôt: 27.09.1993
(51) Int. Cl.: G01N 21/64, G02B 5/26

(54) **Dispositif d'éclairement pour systèmes d'analyse à fluorescences, par exemple, fluorimètre pour microtitration notamment en biologie cellulaire**
Beleuchtungsvorrichtung für Fluoreszenz - Analysiereinrichtungen, z.B. Fluorimeter für Mikrotitrierungen, insbesondere in der Zellbiologie
Illumination arrangement for fluorescence analysis systems, for instance fluorimeters for microtitration, especially in cellular biology

(30) Priorité: 30.09.1992 FR 9211648
(43) Date de publication de la demande: 06.04.1994
(73) Titulaire: Rat, Patrice, F-75012 Paris (FR)
(72) Inventeur: Rat, Patrice, F-75012 Paris (FR)
(74) Mandataire: Hammond, William

(56) Documents cités:
- EP-A- 0 108 524
- EP-A- 0 274 403
- WO-A-87/06698
- US-A- 3 854 050
- US-A- 4 012 954
- PATENT ABSTRACTS OF JAPAN vol. 9, no. 210 (P-383), 28 août 1985 & JP 60 070401 A (TOUSHIBA DENZAI), 22 avril 1985
- PATENT ABSTRACTS OF JAPAN vol. 5, no. 150 (P-081), 22 septembre 1981 & JP 56 081813 A (NIPPON TELEGR.), 4 juillet 1981
- PATENT ABSTRACTS OF JAPAN vol. 10, no. 060 (P-435), 11 mars 1986 & JP 60 202404 A (TOUSHIBA DENZAI), 12 octobre 1985

## Description

La présente invention est relative à un dispositif d'éclairement pour système d'analyse à fluorescence qui peut être, par exemple, un fluorimètre pour microtitration notamment en biologie.

Il existe actuellement sur le marché des fluorimètres particulièrement destinés à la biochimie, tel que celui décrit dans le document US-A-4 501 970. Ce dernier est relatif à un fluorimètre pour mesurer la fluorescence d'échantillons disposés dans des puits de microtitration ; il comporte un système optique, d'une part, pour diriger un faisceau lumineux d'excitation vers le bas dans l'ouverture d'un puits afin d'exciter par fluorescence l'échantillon présent et, d'autre part, pour détecter le faisceau lumineux émis par l'échantillon qui est renvoyé au travers de l'ouverture de ce puits vers un système d'analyse. Dans un tel fluorimètre, la lampe est disposée de telle sorte que son axe soit perpendiculaire au faisceau lumineux émis pénétrant dans l'appareil. Le spectre lumineux de ce faisceau va de l'ultra-violet au visible.

On connaît actuellement un type d'appareil réalisé selon ce brevet américain ; il comporte une lampe à vapeur de mercure ne permettant des mesures que dans l'ultra-violet.

Un autre type de fluorimètre comprend une lampe à tungstène qui émet surtout dans le visible : aucune mesure fiable n'est possible dans l'ultra-violet.

On connaît également différents appareils d'analyse de lumière tels que ceux décrits dans les documents EP-A-274.403, US-A-4.012.954, JP-A-60/070.401, JP-A-56/081.813 et JP-A-60/202.404.

Par ailleurs, la sensibilité de ces divers appareils est de l'ordre de 10⁻⁸ à 10⁻⁹ g/ml de sonde détectée : ceci est satisfaisant en biochimie d'autant que l'échantillon présent dans un puits est une solution.

Dans le domaine de la biologie cellulaire en microtitration, l'échantillon présent dans un puits est une culture cellulaire, c'est-à-dire un milieu hétérogène. De plus les cellules tombant au fond du puits, le faisceau lumineux doit donc pouvoir pénétrer jusqu'au fond du puits, ce qui nécessite un important plus d'énergie.

En outre, la sensibilité doit être de l'ordre de 10⁻¹⁰ à 10⁻¹² g/ml de fluorochrome détecté : ceci n'est pas possible avec les dispositifs de l'art antérieur connus à ce jour de l'homme du métier. En effet les lampes actuellement utilisées dans ces appareils destinés à la biochimie, qu'elles soient au tungstème, à vapeur de mercure ou au xénon, ne permettent pas d'atteindre de telles sensibilités.

Aussi un des buts de la présente invention est-il de fournir un fluorimètre avec un système d'éclairement pour le système d'analyse à fluorescence qui permet d'obtenir une sensibilité minimale de 10⁻¹⁰ à 10⁻¹¹ g/ml au moins sur tout le spectre visible et ultra-violet, et qu'il puisse travailler sur tout l'ensemble de ce spectre. Le faisceau lumineux doit donc avoir un spectre compris entre 290-300 nm et 700-750 nm.

Pour résoudre un tel problème, on peut imaginer d'utiliser deux lampes en parallèle : une lampe pour le spectre ultra-violet et une autre pour le spectre visible. Mais un tel agencement n'est guère pratique car il faudra que le manipulateur non seulement change la lampe, mais également règle, à chaque changement, l'architecture optique de l'appareil selon le spectre d'excitation.

Ainsi qu'il l'a été précédemment dit, il faut une énergie émise par la lampe supérieure à celles actuellement utilisées du fait que les cellules se trouvent au fond du puit. Les seules lampes à haute énergie connue sont les lampes au xénon qui ne permettent d'atteindre qu'une sensibilité de l'ordre de 10⁻⁹ g/ml de sonde détectée. Mais même si on pouvait augmenter celle-ci, ces lampes ne sont pas utilisables non seulement du fait du temps relativement long pour obtenir leur température de travail, mais aussi parce qu'elles chauffent de façon importante nécessitant par là-même des dispositifs de ventilation importants, sinon les systèmes optiques sont rapidement détériorés voire détruits. De plus, il faut noter que ces lampes connues pour réaliser des analyses à fluorescence du fait des appareils de ventilation et des dispositifs pour maintenir une alimentation électrique de quantité, engendrent des bruits de fond diminuant la sensibilité des appareils d'analyse.

L'homme du métier est donc dans l'impossibilité de résoudre le problème énoncé ci-dessus.

Le but ci-dessus, ainsi que d'autres qui apparaîtront par la suite, sont atteints par un fluorimètre comprenant un dispositif d'éclairement, un système optique, au moins un support pour produits à analyser, un système d'analyse et un dispositif pour éliminer l'énergie calorifique, lequel fluorimètre est caractérisé, selon la présente invention, par le fait que le dispositif d'éclairement est constitué par une lampe dont l'axe est colinéaire à la direction du flux émis et à l'axe du système optique, qui émet un flux lumineux entrant dans ce système optique d'au moins 2000 lumens, et qui a une efficacité lumineuse moyenne d'au moins 30 lumens/watt et un flux lumineux moyen d'au moins 1200.10⁶ lumens/m³.

Avantageusement, la lampe est du type argon-iode, xénon à éclats ou halogène-gaz rares.

Avantageusement, le dispositif pour éliminer l'énergie calorifique est un piège à infra-rouge, qui est, par exemple, constitué de cupules assemblées selon un demi-cylindre enveloppant la partie arrière de la lampe par rapport à la direction du flux lumineux émis.

De préférence, le dispositif d'éclairement comprend également un filtre d'excitation interférentiel situé devant la lampe dans la direction du flux lumineux.

Avantageusement, le support pour produit à analyser est constitué par au moins un puits de microtitration ou par deux lames entre lesquelles est disposé ledit produit.

La description qui va suivre et qui ne présente aucun caractère limitatif, doit être lue en regard des figures annexées parmi les quelles :

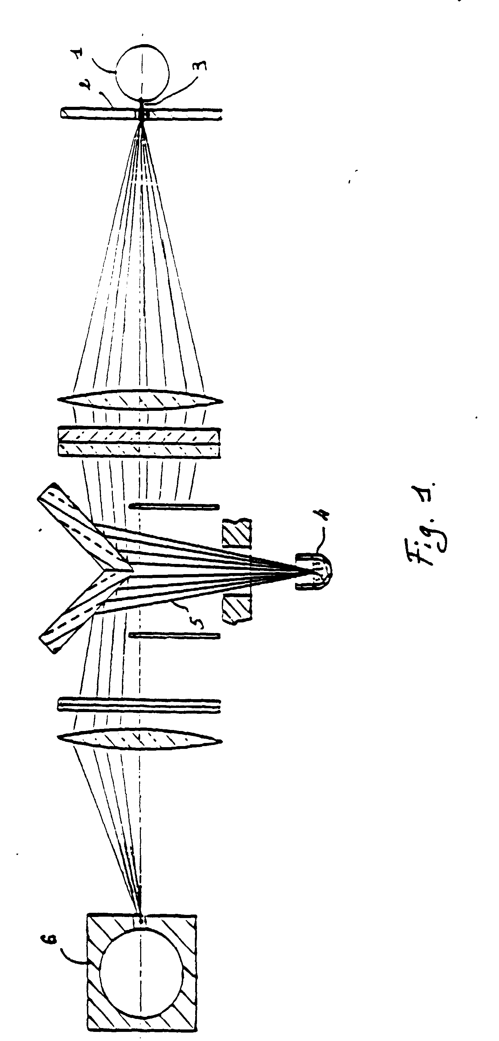

- la figure 1 représente schématiquement un fluorimètre selon l'art antérieur: et

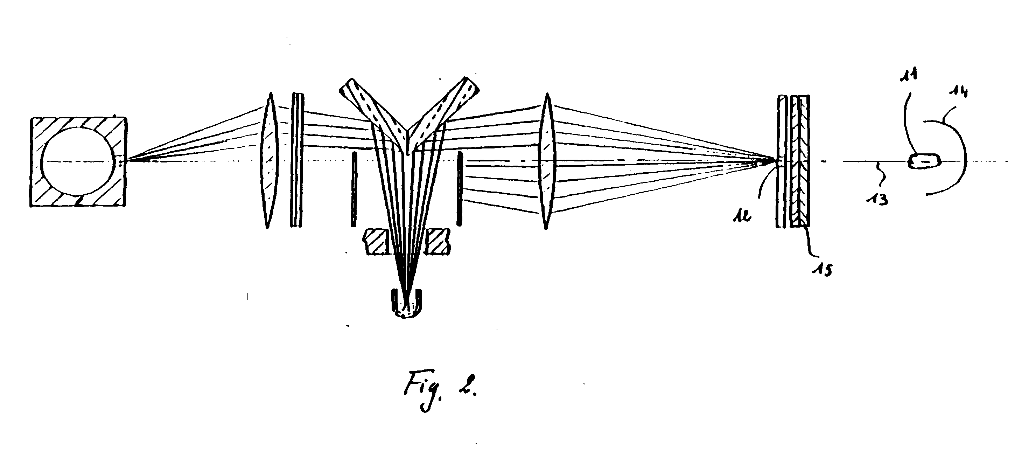

- la figure 2 représente schématiquement ce même fluorimètre mais muni d'un dispositif d'éclairement selon la présente invention.

Afin de permettre à l'homme du métier de mieux comprendre les avantages de la présente invention, le dispositif d'éclairement est décrit en relation avec le fluorimètre objet du document US-A-4 501 970. Ce fluorimètre comprend une lampe 1 disposée juste devant un diaphragme 2 constituant l'entrée d'un tunnel dans lequel est situé un système optique tel que celui précédemment décrit. Le faisceau lumineux 3 qui entre dans ce tunnel, est ensuite dirigé vers un puit 4 de microtitration dans lequel est disposée la solution à analyser. Le faisceau réfléchi 5 est ensuite dirigé vers un système d'analyse 6.

La lampe 1 est une lampe à vapeur de mercure, émettant dans l'ultra-violet, dont l'axe est perpendiculaire à celui du faisceau lumineux 3. La flux lumineux de la lampe traversant le diaphragme 2 est de l'ordre de 1.300 lumens, soit une efficacité lumineuse moyenne de la lampe de l'ordre de 26 lumens/watt.

Selon la présente invention, la lampe 11 utilisée est du genre halogène-krypton-xénon traditionnellement dénommée lampe krypton-xénon par les spécialistes ; elle pourrait être du genre argon-iode, xénon à éclats ou halogène-gaz rares, l'un de ceux-ci étant préférentiellement le xénon. L'axe de cette lampe 11 est colinéaire à l'axe du diaphragme 12 : c'est à dire colinéaire à la direction du flux émis. Le flux lumineux 13 émis par une telle lampe 11 est d'au moins 2000 lumens, par exemple de l'ordre de 2300 lumens.

Cette lampe 11 est caractérisée par une efficacité lumineuse moyenne d'au moins 30 lumens/watt et un flux lumineux moyen d'au moins 1200.10⁶ lumens/m³. Il s'agit donc d'une lampe de petite taille, ne nécessitant de plus aucun dispositif pour réguler son alimentation électrique et aucun temps de chauffage.

Ainsi que l'homme du métier l'aura compris, une telle lampe est donc du type monodirectionnel : elle pourrait être qualifiée de canon photonique. Ainsi pénétrera dans le système d'analyse le maximum de l'énergie.

Ces lampes émettent un faisceau lumineux 13 dont le spectre va de l'ultra-violet au visible, tandis que celle de l'art antérieur émet dans l'ultra-violet ou le visible.

De plus cette lampe comporte un piège 14 à infrarouge : ceci permet d'éliminer l'énergie calorifique et par suite d'éviter l'échauffement des éléments constitutifs du système optique. Ainsi, pénètre dans le tunnel au travers du diaphragme 12 non seulement le flux maximal émis par la lampe 11, mais également la seule énergie photonique émise. Ceci est d'une grande importance, car pour ce type de lampe, l'énergie calorifique émise si elle n'était pas piégée, entraînerait une dégradation, pour ne pas dire une destruction, d'au moins certains éléments constituant le système optique ou électronique.

Le piège 14 à infra-rouge est, par exemple, constitué de cupules assemblées selon un demi-cylindre enveloppant la partie arrière de la lampe par rapport au diaphragme 12.

Comme le sait l'homme du métier, une telle lampe 11 équipée de son piège 14 à infra-rouge doit être placée devant le diaphragme 12 à une distance de celui-ci telle que le faisceau lumineux traversant ce diaphragme puisse être qualifié de froid.

En outre, afin d'améliorer la qualité du faisceau lumineux 13 émis par la lampe 11, le système d'éclairement peut comporter un filtre d'excitation interférentiel 15 qui est situé en avant du diaphragme 12 : seuls pénètrent dans le système optique les photons utiles à la mesure.

Un tel fluorimètre permet d'obtenir des sensibilités de l'ordre de 10⁻¹⁰ à 10⁻¹⁵ g/ml de sonde détectée, par exemple dans une culture cellulaire.

Bien que la présente invention ait été décrite par rapport au système d'analyse à fluorescence objet du document US-A-4 501 970, il est bien évident que le dispositif d'éclairement selon la présente invention peut être adaptée sur tout autre type de fluorimètre et même sur d'autres appareils utilisant la fluorescence comme système d'analyse tel qu'un microscope à fluorecence par exemple, dont le support pour le produit à analyser est constitué par deux lames entre lesquelles est disposé ce produit.

## Revendications

1. Fluorimètre comprenant un dispositif d'éclairement, un système optique, au moins un support pour produit à analyser, un système d'analyse et un dispositif pour éliminer l'énergie calorifique, caractérisé par le fait que le dispositif d'éclairement est constitué par une lampe dont l'axe est colinéaire à la direction du flux émis et à l'axe du système optique, qui émet un flux lumineux entrant dans ledit système optique d'au moins 2000 lumens, et qui a une efficacité lumineuse moyenne d'au moins 30 lumens/watt et un flux lumineux moyen d'au moins 1200.10⁶ lumens/m³.

2. Fluorimètre selon la revendication 1, caractérisé par le fait que la lampe (11) est du type argon-iode, xénon à éclats ou halogène-gaz rares.

3. Fluorimètre selon la revendication 2, caractérisé par le fait que la lampe (11) est une lampe halogène-kryptonxénon.

4. Fluorimètre selon la revendication 1, caractérisé par le fait que le dispositif pour éliminer l'énergie calorifique est un piège (14) à infra-rouge.

5. Fluorimètre selon la revendication 4, caractérisé par le fait que le piège (14) à infra-rouge est constitué de cupules assemblées selon un demi-cylindre enveloppant la partie arrière de la lampe (11) par rapport à la direction du flux lumineux émis.

6. Fluorimètre selon l'une quelconque des revendications 1 à 5, caractérisé par le fait qu'il comprend également un filtre d'excitation interférentiel (15) situé devant la lampe dans la direction du flux lumineux émis.

7. Fluorimètre selon l'une quelconque des revendications 1 à 6, caractérisé par le fait que le support pour produit à analyser est constitué par au moins un puit de microtitration.

8. Fluorimètre selon l'une quelconque des revendications 1 à 6, caractérisé par le fait que le support pour produit à analyser est constitué par deux lames entre lesquelles est disposé ledit produit.

## Patentansprüche

1. Fluorimeter, umfassend eine Beleuchtungsvorrichtung, ein optisches System, mindestens eine Haltevorrichtung für zu analysierende Produkte, ein Analysensystem und eine Vorrichtung zum Abführen von Wärmeenergie dadurch gekennzeichnet, daß die Beleuchtungsvorrichtung von einer Lampe gebildet wird, deren Achse kolinear zur Richtung des emittierten Lichtstroms und zur Achse des optischen Systerms verläuft, die einen in das optische System eintretenden Lichtstrom von mindestens 2000 Lumen aufweist und die eine durchschnittliche Lichtleistung von mindestens 30 Lunen/Watt und einen durchschnittlichen Lichtstrom von mindestens 1200.10⁶ Lumen/m³ besitzt.

2. Fluorimeter nach Anspruch 1, dadurch gekennzeichnet, daß es sich bei der Lampe (11) um eine Lampe vom Typ einer Argon-Iodlampe, einer Xenonbogenlampe oder einer Halo-gen-Bdelgas-Lampe handelt.

3. Fluorimeter nach Anspruch 2, dadurch gekennzeichnet, daß es sich bei der Lampe (11) um eine Halogen-Kryptonxenon-Lampe handelt.

4. Fluorimeter nach Anspruch 1, dadurch gekennzeichnet, daß es sich bei der Vorrichtung zur Abführung von Wärmeenergie um eine IR-Falle (14) handelt.

5. Fluorimeter nach Anspruch 4, dadurch gekennzeichnet, daß die IR-Falle (14) aus halbzylinderförmig angeordneten Hauben besteht, die den in bezug zur Richtung der emittierten Lichtstrahlen rückwärtigen Teil der Lampe (11) umhüllen.

6. Fluorimeter nach einem der Ansprüche 1 bis 5, dadurch gekennzeichnet, daß es ferner einen Interferenzanregungsfilter (15) umfaßt, der sich in Richtung *des* emittierten Lichtstroms vor der Lampe befindet.

7. Fluorimeter nach einem der Ansprüche 1 bis 6, dadurch gekennzeichnet, daß der Träger für das zu analysierende Produkt aus mindestens einer Mikrotitrationsvertiefung besteht.

8. Fluorimeter nach einem der Ansprüche 1 bis 6, dadurch gekennzeichnet, daβ der Träger für das zu analysierende Produkt aus zwei Streifen besteht, zwischen denen das Produkt angeordnet wird.

## Claims

1. A fluorimeter comprising an illumination device, an optical system, at least one holder for the product to be analysed, an analytical system and a device for eliminating heat energy, characterised in that the illumination device comprises a lamp having its axis colinear with the direction of the emitted flux and with the axis of the optical system, the system emitting a light flux of at least 2000 lumens entering the said optical system and having an average light-transmitting efficiency of at least 30 lumens/watt and an average light flux of at least 1200.10⁶ lumens/m³.

2. A fluorimeter according to claim 1, characterised in that the lamp (11) is of the argon-iodine or xenon flash or halogen/rare gases type.

3. A fluorimeter according to claim 2, characterised in that the lamp (11) is a halogen-krypton-xenon lamp.

4. A fluorimeter according to claim 1, characterised in that the device for eliminating heat energy is an infrared trap (14).

5. A fluorimeter according to claim 4, characterised in that the infrared trap (14) is made up of cups fitted together in a hemicylinder which envelops the rear parts of the lamp (11) with respect to the direction of the emitted light flux.

6. A fluorimeter according to any of claims 1 to 5, characterised in that it also comprises an interference excitation filter (15) situated in front of the lamp in the direction of the emitted light flux.

7. A fluorimeter according to any of claims 1 to 6, characterised in that the holder for the product for analysis comprises at least one microtitration well.

8. A fluorimeter according to any of claims 1 to 6, characterised in that the holder for the product for analysis comprises two plates between which the product is disposed.
